# EUROPÄISCHE PATENTSCHRIFT

(11) **EP 3 489 714 B1**
(45) Veröffentlichungstag und Bekanntmachung des Hinweises auf die Patenterteilung: **29.07.2026**
(21) Anmeldenummer: 17204214.5
(22) Anmeldetag: 28.11.2017
(51) Int. Cl.: G01S 7/481

(54) **OPTISCHER DISTANZMESSER MIT SCHALTBARER EMPFANGSAPERTUR**
OPTICAL DISTANCE MEASUREMENT DEVICE WITH SWITCHABLE RECEIVING APERTURE
DISPOSITIF DE MESURE DE DISTANCE OPTIQUE POURVU D'OUVERTURE DE RÉCEPTION COMMUTABLE

(43) Veröffentlichungstag der Anmeldung: 29.05.2019
(73) Patentinhaber: Hexagon Innovation Hub GmbH, 9435 Heerbrugg (CH)
(72) Erfinder: BESTLER, Simon, D-88085 Langenargen (DE); WOHLGENANNT, Rainer, A-6833 Klaus (AT); HINDERLING, Jürg, CH-9437 Marbach (CH)
(74) Vertreter: Kaminski Harmann

(56) Entgegenhaltungen:
- EP-A1- 1 916 545
- EP-A1- 3 236 282
- DE-A1- 102015 218 822
- DE-B3- 102014 215 721
- US-A- 4 129 775

## Beschreibung

Die Erfindung bezieht sich auf einen optischen Distanzmesser zum Durchführen einer Distanzmessung sowohl auf retroreflektierende Ziele wie auch auf diffus streuende Ziele.

Der erfindungsgemässe optische Distanzmesser ist beispielsweise geeignet für Distanz- und Koordinatenmessgeräte in den Bereichen Geodäsie und Industrievermessung, wo typischerweise LIDAR, Lasertracker, Laserscanner, Totalstationen, oder Theodoliten eingesetzt werden.

Beispielsweise weisen derartige Messvorrichtungen eine Genauigkeit von 100 um oder besser auf. Lasertracker sind beispielsweise mit Distanzmessern ausgerüstet, welche bei einer Messung auf retroreflektive Zielmarken eine Genauigkeit von 3-5 um erreichen. Bei reflektorlosen Zielobjekten, beispielsweise optische matte Oberflächen, ist diese Messgenauigkeit typischerweise nicht mehr gewährleistet, insbesondere da das Sammelvermögen der Empfangsoptik typischerweise nicht ausreichend ist.

Derartige Lasertracker werden zum Beispiel in der industriellen Vermessung eingesetzt, z.B. zur koordinativen Positionsbestimmung von Punkten eines Bauteils wie einem Fahrzeugrumpf beispielsweise im Rahmen einer Inspektion oder zur fortlaufenden Positionsüberwachung eines sich bewegenden Maschinenteils. Typischerweise sind solche Lasertracker ausgebildet für eine koordinative Positionsbestimmung eines retro-reflektierenden Zielpunkts und üblicherweise für eine fortlaufende Verfolgung dieses Zielpunkts. Ein Zielpunkt kann dabei durch eine retroreflektierende Einheit (z.B. Würfeleckprisma) repräsentiert sein, die mit einem von einer Strahlquelle des Messgeräts bzw. des Distanzmessers des Messgeräts erzeugten optischen Messstrahl, insbesondere einem Laserstrahl, angezielt wird. Der Laserstrahl wird parallel zurück zum Messgerät reflektiert, wobei der reflektierte Strahl mit Erfassungsmitteln des Messgeräts bzw. des Distanzmessers erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz vom Messgerät zum Zielpunkt, z. B. mittels Laufzeit- oder Phasendifferenzmessung, mittels optischem Interferometer oder mittels des Fizeau-Prinzips ermittelt. Anhand der Emissions- bzw. Empfangsrichtung und der Distanz werden die Positionskoordinaten des Zielpunkts bestimmt.

Ausserdem wird in modernen Trackersystemen auf einem Feinanzielsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden. Bei schnellen Bewegungen des Zielobjekts ist die fortlaufende Zielverfolgung (Tracking) oft nicht exakt, was zu einer Winkelablage von der idealen, kalibrierten Messrichtung führt. Diese Richtungsdifferenz kann aber mittels des Feinanzielsensors, welcher in der Regel eine Kamera aufweist, in Echtzeit gemessen und berücksichtigt werden. Dadurch sind Entfernung und Position, beziehungsweise die Koordinaten des Zielpunkts, fortlaufend bekannt.

Der Zielpunkt bzw. der Retroreflektor kann dabei an einem Messhilfsinstrument angebracht sein, z.B. ein sogenanntes Tastwerkzeug, das mit einem Kontaktpunkt auf einem Punkt des zu vermessenden Objekts positioniert wird. Das Tastwerkzeug weist Markierungen, z. B. Lichtpunkte, und einen Reflektor auf, der den Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind.

Nicht möglich mit gewöhnlichen Lasertrackern des Stands der Technik ist die Messung von Entfernungen ohne den Einsatz von einen Retroreflektor aufweisenden Messhilfsmitteln, d.h. ein Messen direkt zu einer Oberfläche eines zu vermessenden Objektes.

Demgegenüber existieren spezielle Lasertrackern welche ein scannendes Vermessen von Oberflächenpunkten ermöglichen, also ein Bestimmen von sehr vielen Punktkoordinaten auf der Oberfläche eines zu vermessenden Objektes, was in vergleichsweise kurzer Zeit erfolgt. Hierfür müssen allerdings im Vergleich zum Vermessen retroreflektierender Ziele Genauigkeitseinbussen in Kauf genommen werden.

Die US 2014/0226145 A1 offenbart einen Lasertracker, der sowohl ein retroreflektierendes Ziel als auch eine natürliche (also nicht-retroreflektierende) Oberfläche vermessen kann. Hierzu weist der Lasertracker einen ersten Absolutdistanzmesser auf, der wie bekannt ausgebildet ist zum Messen zu einem Retroreflektor. Zusätzlich weist der Lasertracker einen zweiten Absolutdistanzmesser auf, der ausgebildet ist zum Messen zu einer Objektoberfläche. Die jeweiligen Absolutdistanzmesser senden zwar ihre Messstrahlung durch eine einzige Austrittsoptik, sind aber jeweils getrennte, unabhängige Einheiten. Die Notwendigkeit, zwei völlig eigenständige, separate Absolutdistanzmesser bereitzustellen, ist produktionstechnisch aufwendig und damit teuer.

Die DE 102014215721 B3 offenbart einen optischen Sensor mit einem Photomischdetektor mit einer Abblendvorrichtung zur Beeinflussung der Form und Lage seiner optischen wirksamen Fläche.

Um die geforderte hohe Empfindlichkeit für das Erfassen der vergleichsweise schwachen zurückkommenden Signale bei reflektorlosen Messungen zu gewährleisten, muss beispielsweise der Querschnitt der Empfangsoptik möglichst gross ausgelegt sein. Retroreflektive Zielobjekte haben in der Regel jedoch einen kleinen Durchmesser, beispielsweise zwischen 10 mm und 40 mm.

Bei sogenannter Fehlzielung zum Retroreflektor entsteht ein paralleler Strahlversatz und der Empfangsstrahl kann daher auf einem gross ausgelegten Empfangsobjektiv je nach Anzielung seitlich verschieden eintreffen, was zu Distanzmessfehlern führen kann, typischerweise charakterisiert durch ein sogenanntes Fehlrichtdiagramm.

Um die Intensitätsunterschiede der zurückkommenden Strahlung bei Messungen auf retroreflektive Ziele gegenüber Messungen auf natürliche, diffus streuende, Ziele zu kompensieren, werden beispielsweise verstellbare Abschwächfilter im Sendekanal verwendet, um die ausgesendete Signalamplitude an die elektronische Empfangseinheit anzupassen.

Ferner können bei reflektiven, insbesondere retroreflektiven, Zielen Mehrfachreflexionen zwischen Zielobjekt und Instrument oder Mehrfachreflexionen innerhalb des Empfangskanals des Distanzmessers auftreten. Die Wahrscheinlichkeit solcher Mehrfachreflexionen ist proportional zur Grösse des empfängerseitigen Gesichtsfelds (RX-FoV). Solche parasitären Signalanteile ("Boomerang-Signale") stören die Messgenauigkeit. Auch bei einem kleinen empfängerseitigen Gesichtsfeld (RX-FoV) sind diese Boomerang-Signale noch ausreichend stark um beispielsweise eine Messgenauigkeit von besser als 100 µm zu verhindern. Empfängerseitig werden bei auf Retroreflektoren messenden Distanzmessern deshalb beispielsweise spezielle Antiboomerangfilter als Fixfilter oder als verstellbares Abschwächfilter eingesetzt. Als Fixfilter würden diese Antiboomerangfilter bei Messungen auf natürliche Ziele jedoch stören, da das Signal ohnehin schon schwach ist und sowieso keine Mehrfachreflexionen zwischen Zielobjekt und Instrument auftreten.

Zudem treten - hauptsächlich bei empfängerseitigen Fixfokusanordnungen - bei bekannten koaxialen aber auch biaxialen Distanzmessanordnungen aus dem Stand der Technik in der Regel Abschattungen des Empfangslichts im Nahbereich (z.B. < 5m) auf. Solche Abschattungen werden beispielsweise erzeugt durch auf der optischen Achse platzierte

Sendestrahlenspiegel, welche im Nahbereich die Sicht der Empfangsdiode auf den Lichtpunkt am Zielobjekt blockieren.

Diese Fixfokusanordnungen führen dazu, dass in einem sehr nahen Distanzbereich von 0 m bis zu einer gewissen Grenzdistanz praktisch kein Signal durch den Empfänger erfasst wird. Solche nicht messbaren Entfernungsbereiche sind störend und erschweren den Arbeitsablauf der jeweiligen Vermessungsaufgabe.

Es ist daher Aufgabe der vorliegenden Erfindung, einen verbesserten optischen Distanzmesser bereitzustellen, welcher die Vermessung sowohl zu einem retroreflektierenden Ziel als auch einem diffus streuenden Ziel ermöglicht und womit die aus dem Stand der Technik bekannten Nachteile vermieden werden.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft einen optischen Distanzmesser, insbesondere zur Verwendung in einem Lasertracker, einem Laserscanner, einer Totalstation, oder einem Theodoliten, mit einem Transmitter, der konfiguriert ist zum Erzeugen eines eine Zielachse definierenden gerichteten, insbesondere im Wesentlichen kollimierten, Sendestrahls, einem Empfänger, der konfiguriert ist zum Erfassen von zumindest einem Teil des vom Ziel zurückkommenden Sendestrahls, nachfolgend Empfangsstrahlung genannt, und einem im Wesentlichen eine einzelne Erfassungsrichtung zum Erfassen der Empfangsstrahlung definierenden Empfangskanal. Der Distanzmesser ist konfiguriert zum Durchführen einer Distanzmessung mittels einer Pulslaufzeitmessung in einem ersten Messmodus, in dem der Distanzmesser eingestellt ist zur Distanzmessung auf ein retroreflektierendes Ziel, und einem zweiten Messmodus, in dem der Distanzmesser eingestellt ist zur Distanzmessung auf ein diffus streuendes (natürliches) Ziel.

Gemäss der vorliegenden Erfindung ist der Empfangskanal derart konfiguriert, dass für das Erfassen der Empfangsstrahlung im ersten Messmodus eine erste Apertur des Empfangskanals eingestellt ist, d.h. eine erste freie Öffnung des Empfangskanals durch welche der für die Distanzmessung im ersten Messmodus verwendete Teil der Empfangsstrahlung tritt, im zweiten Messmodus eine zweite Apertur des Empfangskanals eingestellt ist, d.h. eine zweite freie Öffnung des Empfangskanals durch welche der für die Distanzmessung im zweiten Messmodus verwendete Teil der Empfangsstrahlung tritt, wobei die erste Apertur kleiner ist als die zweite Apertur.

Zum Beispiel ist der Empfangskanal derart konfiguriert, dass das Verhältnis zwischen der Fläche der ersten Apertur zur Fläche der zweiten Apertur kleiner als 1/10 ist, insbesondere kleiner 1/20.

Ferner weist der Empfangskanal gemäss einer Ausführungsform beispielsweise ein abhängig vom Durchführen des ersten und zweiten Messmodus schaltbares, nämlich im ersten und zweiten Messmodus unterschiedlich präsentes, Abschwächelement auf, welches beispielsweise als schaltbarer Antiboomerang-Filter wirkt, wodurch die Messgenauigkeit erhöht wird. Zum Beispiel kann das schaltbare Abschwächelement als ein in den Empfangskanal ein- und ausschwenkbarer Filter mit einer Transmission kleiner als 50 Prozent, oder als ein Verlaufsfilterrad ausgebildet sein.

Zum Beispiel weist der Empfangskanal eine die erste Apertur definierende schaltbare Aperturblende auf, wobei die schaltbare Aperturblende derart konfiguriert ist, dass die schaltbare Aperturblende im ersten Messmodus in den Strahlengang des Empfangskanals eingeschwenkt wird, oder die Blendenöffnung der schaltbaren Aperturblende derart einstellbar ist, dass mittels einer ersten Einstellung die erste Apertur und mittels einer zweiten Einstellung die zweite Apertur eingestellt wird, insbesondere wobei die schaltbare Aperturblende eine Irisblende ist.

Eine Wirkung der ersten Apertur ist beispielsweise ein Unterstützen eines optisch hinreichend eindeutig definierten Zustands, wobei die Länge der optischen Pfade im Empfangsstrahlengang alle interferometrisch gleich lang sind. Dadurch wird eine Verbesserung des empfängerseitigen Fehlrichtdiagramms erreicht, da das Empfangsbündel für Messungen auf einen Retroreflektor immer dieselbe Form hat, unabhängig davon wie genau die Mitte des Retroreflektors angezielt wird.

Das schaltbare Abschwächelement und die schaltbare Aperturblende können beispielsweise auf einem gemeinsamen Verstellelement des Empfangskanals angeordnet sein und somit im ersten Messmodus gemeinsam in den Strahlengang des Empfangskanals ein- beziehungsweise im zweiten Messmodus gemeinsam aus dem Strahlengang des Empfangskanals ausgeschwenkt werden.

Gemäss einer weiteren Ausführungsform weist der Empfangskanal ein fix angeordnetes, nämlich im ersten und zweiten Messmodus identisch präsentes, Abschwächelement zur Abschwächung der durch das Abschwächelement tretenden Empfangsstrahlung auf. Das fix angeordnete Abschwächelement ist dabei in seiner lateralen Geometrie derart konfiguriert und in seiner lateralen Position im Empfangskanal derart angeordnet, dass das fix angeordnete Abschwächelement im ersten Messmodus mindestens die durch die erste Apertur tretenden Strahlenbündel der Empfangsstrahlung abschwächt, und im zweiten Messmodus durch die zweite Apertur tretende Empfangsstrahlung vom fix angeordneten Abschwächelement nicht abgeschwächte Strahlenbündel aufweist.

Beispielsweise kann das Optiksystem des erfindungsgemässen Distanzmessers koaxial ausgelegt sein, wobei der Distanzmesser einen auf der optischen Achse des Empfangskanals angeordneten Strahlteiler zum Einkoppeln des Sendestrahls auf eine zur optischen Achse des Empfangskanals koaxiale, der Zielachse entsprechenden, Achse aufweist. Der Strahlteiler ist dabei derart konfiguriert und angeordnet, dass der Strahlteiler in einer zentralen Zone um die optische Achse des Empfangskanals eine partiell-transparente Schicht aufweist, insbesondere wobei mittels der partiell-transparenten Schicht in der zentralen Zone ein Strahlteilungsverhältnis des Strahlteilers von weniger als 50 Prozent für den Empfangskanal erzeugt wird, und die partiell-transparente Schicht zumindest einen Teil des fix angeordneten Abschwächelements bildet, insbesondere wobei die partiell-transparente Schicht das fix angeordnete Abschwächelement bildet.

Im Gegensatz zu koaxialen Distanzmessern aus dem Stand der Technik, welche typischerweise ein strahlungsundurchlässiges Spiegelelement zum koaxialen Einkoppeln der Sendestrahlung auf die optische Achse des Empfangskanals verwenden, werden die aus dem Stand der Technik bekannten Abschattungen des vom Retroreflektor zurückkommenden Empfangsstrahls im Nahbereich (z.B. < 5m) vermieden. Grundsätzlich erübrigt sich durch das fix angeordnete Abschwächelement also eine spezielle aus dem Stand der Technik bekannte Nahbereichsoptik für Messungen auf Retroreflektoren.

In einer weiteren Ausführungsform weist der Empfangskanal eine eine Korrekturzone des Empfangskanals definierende Korrekturoptik auf, insbesondere konfiguriert als Nahbereichsoptik, zur Kompensation eines Fokusfehlers bei der Fokussierung von aus einer Distanz kürzer als eine definierte Nahbereichsgrenzdistanz zurückkommenden Teilen der Empfangsstrahlung auf dem Empfänger, nämlich wobei in der Korrekturzone liegende Teile der Empfangsstrahlung durch die Korrekturoptik auf den Empfänger abgelenkt werden.

Die Korrekturoptik kann beispielsweise derart angeordnet sein, dass zumindest ein Teil der durch die zweite Apertur tretenden Empfangsstrahlung innerhalb der Korrekturzone liegt, und durch die erste Apertur tretende Empfangsstrahlung im Wesentlichen ausserhalb der Korrekturzone liegt, wobei die Korrekturoptik insbesondere derart konfiguriert ist, dass der empfängerseitig bewirkte Laufzeitbeitrag zur Laufzeit der Strahlenbündel der Empfangsstrahlung innerhalb der Korrekturzone identisch ist zum empfängerseitig bewirkten Laufzeitbeitrag zur Laufzeit der Strahlenbündel der Empfangsstrahlung ausserhalb der Korrekturzone.

Gemäss einer weiteren Ausführungsform sind das fix angeordnete Abschwächelement, die Korrekturoptik, und die schaltbare Aperturblende derart gegeneinander angeordnet und in ihrer lateralen Geometrie jeweils derart konfiguriert, dass im ersten Messmodus im Wesentlichen die gesamte auf den Empfänger treffende Empfangsstrahlung durch das fix angeordnete Abschwächelement abgeschwächt wird und ausserhalb der Korrekturzone liegt, und im zweiten Messmodus die Aperturblende aus dem Strahlengang des Empfangskanals ausgeschwenkt ist und durch die zweite Apertur tretende Empfangsstrahlung vom fix angeordneten Abschwächelement nicht abgeschwächte Strahlenbündel aufweist, welche gleichzeitig innerhalb der Korrekturzone liegen. Insbesondere hat dabei die Korrekturzone keinen Überlapp mit einer durch das fix angeordnete Abschwächelement definierten Abschwächzone.

Zudem kann das erfindungsgemässe Einstellen der empfängerseitigen Apertur beispielsweise mit einer strahlaufweitenden Optik im Sendekanal kombiniert werden, z.B. mit einer im ersten Messmodus einschwenkbaren Negativlinse, einer Lochblende oder einem diffraktiven optischen Element. Dadurch wird die Strahldivergenz aufgeweitet, beispielsweise um den Faktor zehn, sodass der retroreflektierte Strahl die komplette Oeffnung des Empfangskanals bestrahlt, selbst wenn eine Fehlzielung zum Zentrum des Retroreflektors vorliegt. Durch die Erhöhung der senderseitigen Divergenz werden Abweichungen der für die Laufzeit bestimmenden Modulationswellenfront der optischen Pulse durch ein sogenanntes laterales Zoomen lokal geglättet, wodurch in Kombination mit der erfindungsgemässen Einstellung der empfängerseitigen Apertur systematische, durch Fehlzielung zum Zentrum des Reflektors entstehende räumliche Fehler reduziert werden.

Zum Beispiel ist der Transmitter gemäss einer weiteren Ausführungsform konfiguriert, im ersten Messmodus den Sendestrahl mit einer Strahldivergenz zu erzeugen, so dass beim Durchführen der Distanzmessung auf eine definierte minimale Messdistanz die erste Apertur vollständig von der Empfangsstrahlung ausgeleuchtet wird, und die Strahldivergenz kleiner ist als ein Fünffaches des empfängerseitigen Gesichtsfeldwinkels.

Gemäss einer anderen Ausführungsform ist der Transmitter konfiguriert, den Sendestrahl in einem definierten variablen Fokussierzustand einzustellen, wobei im ersten Messmodus ein erster Fokussierzustand des Sendestrahls eingestellt wird, wobei der Sendestrahl im ersten Fokussierzustand eine Divergenz aufweist, und im zweiten Messmodus ein zweiter Fokussierzustand des Sendestrahls eingestellt wird, wobei der Sendestrahl im zweiten Fokussierzustand im Wesentlichen eine parallele Strahlausbreitung aufweist.

Zum Beispiel kann der Transmitter ferner derart konfiguriert sein, dass im ersten Messmodus der Sendestrahl eine definiert einstellbare Strahldivergenz aufweist, insbesondere wobei die Strahldivergenz des Sendestrahls basierend auf einer Distanz zum Ziel eingestellt wird.

Bei zwei benachbarten Retroreflektoren muss sichergestellt werden, dass der divergente Strahl nur einen Reflektor beleuchtet, ansonsten ist die Distanzmessung verfälscht. Eine solche Störung durch ein benachbartes Ziel kann vermieden werden, indem die Strahldivergenz unter Berücksichtigung des lateralen Abstands zu einem benachbarten Ziel eingestellt wird.

Ferner weist der Sendekanal des optischen Distanzmessers in einer weiteren Ausführungsform ein schaltbares Abschwächelement auf, insbesondere basierend auf mindestens einem von einem einstellbaren Graukeil-Filter, einem Flüssigkristallabschwächer, und einem faseroptischen Mach-Zehnder-Interferometer.

Der erfindungsgemässe optische Distanzmesser wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b:: Prinzipdarstellung eines erfindungsgemässen optischen Distanzmessers konfiguriert für die Messung auf diffus streuende Ziele (a) respektive auf Retroreflektoren (b);
- Fig. 2:: Prinzipdarstellung einer weiteren Ausführungsform des erfindungsgemässen optischen Distanzmessers;
- Fig. 3:: Prinzipdarstellung einer weiteren Ausführungsform des erfinderischen optischen Distanzmessers in einer Konfiguration für retroreflektierende Zielobjekte;
- Fig. 4:: Prinzipdarstellung einer weiteren Ausführungsform der erfinderischen optischen Distanzmessers mit faseroptischem Aufbau sowohl im Start- wie auch im Empfangskanal;
- Fig. 5:: schematische Darstellung einer Korrekturoptik im Empfangskanal;
- Fig. 6a,b:: schematische Darstellung der gemeinsamen Wirkung der Korrekturoptik zusammen mit der erfinderischen, schaltbaren Aperturblende im Empfangskanal;
- Fig. 7:: schematische Darstellung einer weiteren Ausführungsform der erfinderischen, schaltbaren optischen Aperturblende im Empfangskanal.

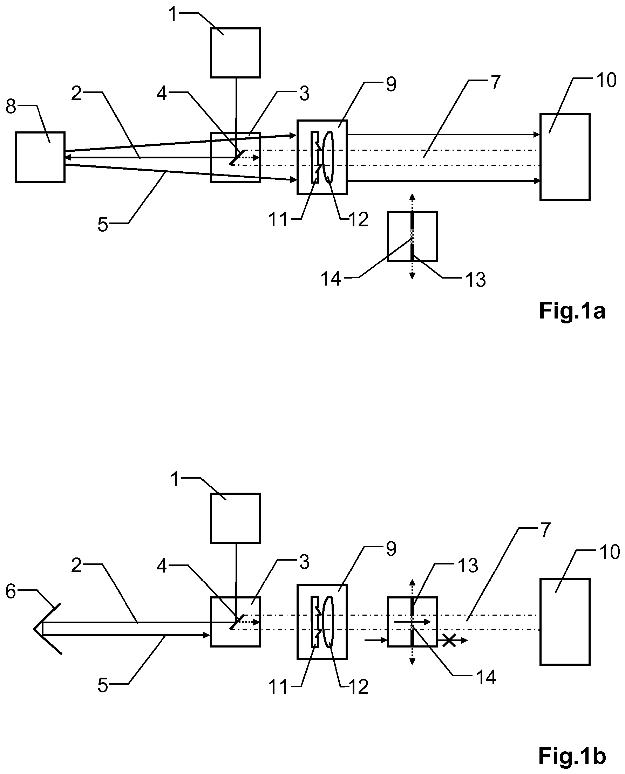

Die **Figuren 1a und 1b** zeigen jeweils Prinzipdarstellungen eines erfindungsgemässen optischen Distanzmessers in einer Konfiguration für die Messung auf diffus streuende Ziele (Fig. 1a) beziehungsweise auf Retroreflektoren.

In der gezeigten Ausführungsform ist das Optiksystem koaxial, wobei der vom Transmitter 1 erzeugte Sendestrahl 2 mittels eines Strahlteilers 3 auf eine zur optischen Achse des Empfangskanals koaxiale, der Zielachse entsprechende Achse eingekoppelt wird. Erfindungsgemäss weist der Strahlteiler 3 dabei beispielsweise in einer zentralen Zone um die optische Achse des Empfangskanals eine partiell-transparente Schicht auf 4, welche partiell reflektiert und transmittiert.

Der Strahlteiler 3 ist also derart ausgelegt, dass er als Nahbereichsoptik für den Empfangstrahl 5 von einem retroreflektierenden Objekt 6 wirkt, indem im Empfangskanal eine zentrale Zone 7 mit abgeschwächten Strahlenbündeln der Empfangsstrahlung 5 gebildet wird.

Bei einer Messung auf ein diffus streuendes Zielobjekt 8, wie in der Figur 1a dargestellt, wirkt das Zielobjekt selber, im Gegensatz zu einem Retroreflexionsspiegel 6, als Lichtquelle. Es emittiert divergente Empfangsstrahlung 5 wodurch die gesamte Oeffnung des Empfangsobjektives 9 getroffen wird. Ein Teil der Strahlung wird durch die partiell-transparente Schicht 4 des Strahlteilers 3 abgeschwächt und liegt in der zentralen Zone. Ein grösserer Teil der Empfangsstrahlung 5 liegt und passiert den Strahlteiler 3 jedoch in einer äusseren Zone mit hoher Transmission, z.B. annähernd 100 %.

Ist das Empfangsobjektiv 9 als Fixfokusoptik ausgelegt, fokussiert dieses die Strahlung lediglich bei Distanzen grösser als die Scheinwerfergrenzdistanz vollständig auf den Empfänger 10, beispielsweise eine Photodiode oder eine SPAD-Anordnung ("Single-Photon-Avalanche-Photodioden Anordnung" auch SiPM genannt). Bei kurzen Objektdistanzen ist das Empfangsstrahlenbündel bei der axialen Position des Empfängers 10 im Durchmesser wesentlich grösser als dieser, wodurch ein grosser Teil der Empfangsstrahlung 5 verloren geht. Bei reflektierenden Zielobjekten ist dieser Effekt vorteilhaft, da das Signal ausreichend stark ist und bei kurzen Distanzen nicht weiter anwächst, sodass die Amplitudendynamik des Empfangssignals in einem angemessenen Aussteuerbereich bleibt. Hingegen ist bei diffus streuenden Oberflächen einerseits die Scheinwerfergrenzdistanz in etwa doppelt so lang wie bei retroreflektierenden Zielen und anderseits wegen der optischen Streuung kleiner. Um nun das Empfangssignal bei duffus streuenden Zielen zu erhöhen und damit das Signal-Rausch-Verhältnis zu steigern, wird beispielsweise eine zusätzliche Nahbereichsoptik 11 in der Nähe der Apertur der Empfangslinse 12 platziert. Im Stand der Technik sind unterschiedliche Korrekturoptiken 11 für den Nahdistanzbereich bekannt, beispielsweise basierend auf optischen Keilen in einer Planplatte oder direkt integriert mit der Empfangslinse, wobei beispielsweise der optische Weg im Keilbereich identisch ist zum Weg in der Trägerplatte.

Bei einer Anzielung auf einen Retroreflektor 6, wie in der Figur 1b dargestellt, wird der Sendestrahl 2 optisch einwandfrei gespiegelt und parallel zur optischen Achse auf den Strahlteiler 3 zurückgeworfen. Die partiell-transparente Schicht 4 mit einer Teiltransmission von beispielsweise 30 % leitet die Empfangsstrahlung 5 auf das Empfangsobjektiv 9, welches die Strahlung auf den Empfänger 10 fokussiert.

Bei einer Zielung neben das Zentrum des Retroreflektors 6 entsteht ein Lateralversatz des reflektierten Strahls 5 zur optischen Zielachse. Dadurch trifft das Empfangsbündel neben die partiell-transparente Schicht des Strahlteilers und kann unter Umständen die Nahbereichsoptik 11, welche ausgelegt ist für reflektorlose Distanzmessung, treffen. Da die Nahbereichsoptik 11 für diffuse Ziele innerhalb nahen Distanzen von ein paar Metern ausgelegt ist, wird das von einem Retroreflektor reflektierte Licht unkontrolliert im Empfängerraum abgelenkt, was zu unkontrolliertem Streulicht und damit ungenauen Distanzmessungen führen kann. Damit dies nicht passiert, wird erfindungsgemäss im Messmodus für Messungen auf Retroreflektoren die Empfangsapertur derart angepasst, beispielsweise mit einer einschwenkbaren Blende 13, dass die Empfangsapertur auf die zentrale Zone 7 reduziert wird. Die Strahlung ausserhalb der zentralen Zone 7 ist damit für den Empfänger ausgeblendet. Dadurch wird optisch ein eindeutig definierter Zustand erreicht und die Länge der optischen Pfade im Empfangsstrahlengang sind alle interferometrisch gleich lang, wodurch eine sehr hohe Messgenauigkeit erreicht wird, z.B. bis zu einem Mikrometer genau.

Um die hohe Messgenauigkeit weiter zu sichern, wird bei Messungen auf Retroreflektoren 6 im Empfangskanal beispielsweise zusätzlich ein Abschwächfilter 14 in den Strahlengang eingeschwenkt. Dieses bewirkt eine Unterdrückung von Mehrfachreflexionen zwischen Empfänger 10 und Retroreflektor 6 (empfängerseitiges Antiboomerangfilter) und kann beispielsweise wie in der Figur dargestellt direkt in der einschwenkbaren Blende 13 integriert sein.

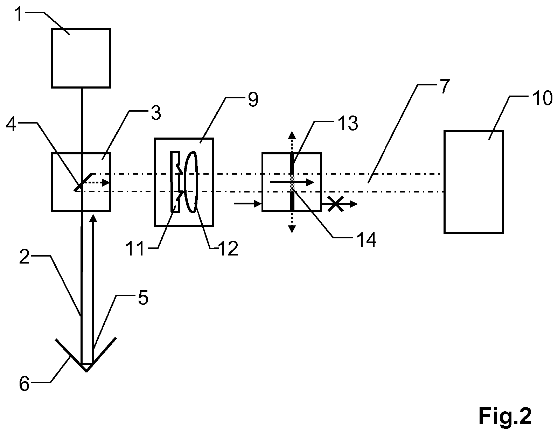

**Figur 2** zeigt eine weitere Ausführungsvariante des erfindungsgemässen optischen Distanzmessers. Im Gegensatz zu den Figuren 1a,1b ist der Strahlteiler 3 mit der partiell-transparenten Schicht 4 derart ausgestaltet, dass der Sendestrahl 2 den Strahlteiler 3 in Transmission und die Empfangsstrahlung 5 den Strahlteiler 3 in Reflexion passiert. Beispielsweise ist dabei die Transmission des Sendestrahls 2 am Strahlteiler 3 im Bereich der zentralen Zone 7 grösser als 50 % und die Netto-Transmission für die Empfangsstrahlung kleiner als 50 %.

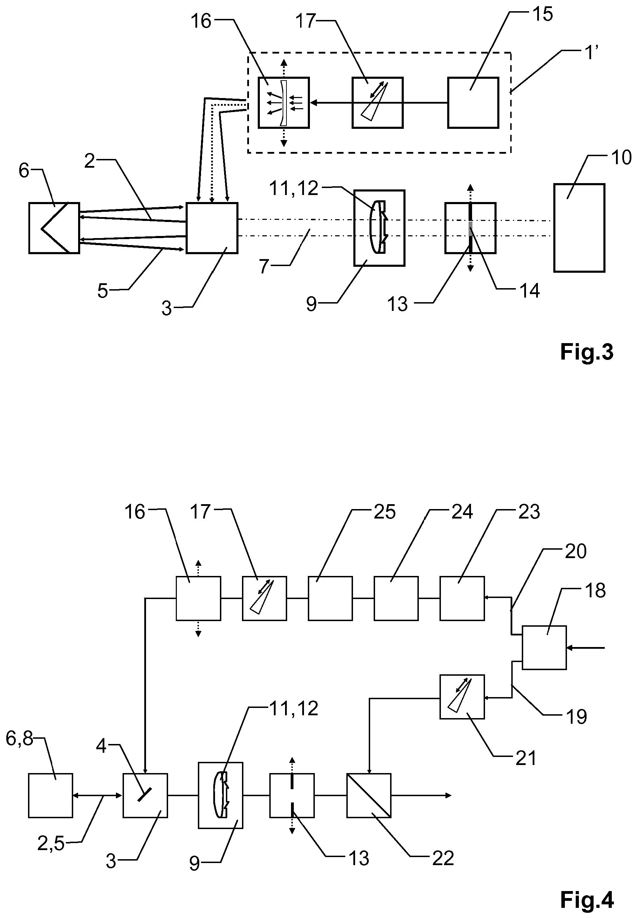

**Figur 3** zeigt eine Prinzipdarstellung einer weiteren Ausführungsform des erfinderischen optischen Distanzmessers in einer Konfiguration für retroreflektierende Zielobjekte 6.

Das Anzielen des Zentrums eines Retroreflektors 6 mittels eines senderseitig kollimierten, im Wesentlichen parallelen, Laserstrahls 2 erfordert einen hoch-präzisen und aufwendigen Anzielungsprozess. Bei einer Fehlzielung zum Reflektor 6 weist der rückreflektierte Strahl 5 einen Strahlversatz zur optischen Achse des Empfangskanals auf und die Empfangsoptik 9 wird nur teilweise oder gar nicht getroffen. Dies führt zu unerwünschten Signalschwankungen und blockiert unvorhersehbar Teile des Messstrahls, was zu Distanzmessungenauigkeiten und Messunterbrüchen führt.

Um dies zu verhindern ist der Transmitter 1' konfiguriert, den Sendestrahl 2 mit einer definierten variablen Strahldivergenz zu erzeugen. Beispielweise wird dazu im Sendekanal nach der Laserstrahlquelle 15 eine strahlaufweitende Optik 16 eingeschwenkt, z.B. eine Negativlinse, eine lichtbeugende Lochblende oder ein diffraktives optisches Element, wodurch die Strahldivergenz aufgeweitet wird. Die Strahldivergenz wird dabei beispielsweise derart eingestellt, dass diese mindestens dem Divergenzwinkel des empfängerseitigen Gesichtsfelds entspricht. Dies bewirkt, dass der retroreflektierte Strahl 5 ab der empfängerseitigen Scheinwerfergrenzdistanz die komplette Öffnung des Empfangskanals bestrahlt, selbst wenn eine Fehlzielung zum Zentrum des Retroreflektors 6 vorliegt.

Beispielsweise sind die Winkel des empfängerseitigen Gesichtsfelds 1 bis 3 mrad. Falls die Sendedivergenz 5 mrad beträgt, ist der Querschnitt des retroreflektierten Empfangsbündels dann bei einer Cornercube-Distanz von 1 m bereits 10 mm und überdeckt die im ersten Messmodus relevante zentrale Zone 7 komplett.

Durch die Erhöhung der senderseitigen Divergenz werden Abweichungen der für die Laufzeit bestimmenden Modulationswellenfront der optischen Pulse durch ein sogenanntes laterales Zoomen lokal geglättet, dadurch werden systematische, räumliche Fehler, welche durch Fehlzielung zum Zentrum eines Reflektors 6 entstehen, reduziert.

Ferner kann beispielsweise, wie in der Figur dargestellt, im Sendekanal ebenfalls ein weiterer Antiboomerangfilter 17 in Form eines einstellbaren Abschwächfilters, z.B. ein Verlauffilterrad, eingebaut sein.

**Figur 4** zeigt schematisch eine weitere Ausführungsform mit faseroptischem Aufbau sowohl im Start- wie auch im Empfangskanal.

Als Strahlungsquelle können beispielsweise fasergekoppelte Laserdioden, Faserlaser oder seeded Faserverstärker eingesetzt werden. Die erzeugte Strahlung wird mittels eines Faserkopplers 18 aufgeteilt in einen Startpfad 19 und einen Sendepfad 20 (TX-Pfad).

Alle Fasern im Sendepfad sind beispielsweise Singlemodefasern oder PM-Fasern (polarisationserhaltend). Die Strahlung im Startpfad 19 wird über einen, beispielsweise elektrisch, einstellbaren Abschwächfilter 21, z.B. ein Graukeil oder ein faseroptisches Mach-Zehnder-Interferometer, geräteintern über einen Strahlteiler 22 auf den Empfangskanal eingekoppelt. Über den Startpfad 19 wird ein optisches Referenzsignal erzeugt, welches den exakten Startzeitpunkt des Messignals, d.h. des Messpulses für eine Pulslaufzeitmessung, definiert.

Mittels des Verlauffilters 21 kann zudem der systematische signalstärkenabhängige Distanzmessfehler (Range Walk) laufend bestimmt werden. Dabei werden zum Beispiel die aufgenommenen Distanzoffsets in einer Lookup-Tabelle festgehalten und werden anschliessend bei nachfolgenden Distanzmessungen zur Kompensation von ermittelten Rohdistanzen verwendet.

Der faseroptisch ausgeführte Sendekanal 20 (TX-Pfad) ist beispielsweise mit einem variablen optischen Abschwächer 23 (VOA, "variable optical attenuator") bestückt. Typische faseroptische Abschwächer 23 basieren beispielsweise auf akkusto-optischen Modulatoren (AOM) oder elektro-optischen

Mittels des Verlauffilters 21 kann zudem der systematische signalstärkenabhängige Distanzmessfehler (Range Walk) laufend bestimmt werden. Dabei werden zum Beispiel die aufgenommenen Distanzoffsets in einer Lookup-Tabelle festgehalten und werden anschliessend bei nachfolgenden Distanzmessungen zur Kompensation von ermittelten Rohdistanzen verwendet.

Der faseroptisch ausgeführte Sendekanal 20 (TX-Pfad) ist beispielsweise mit einem variablen optischen Abschwächer 23 (VOA, "variable optical attenuator") bestückt. Typische faseroptische Abschwächer 23 basieren beispielsweise auf akkusto-optischen Modulatoren (AOM) oder elektro-optischen Modulatoren (EOM) mit Einstellgeschwindigkeiten von einigen Mikrosekunden bis 100 Nanosekunden. Beispielsweise kann damit die Signalamplitude bei einer Messrate von bis zu 10 MHz von Messung zu Messung präzise eingestellt werden.

Dabei hängt die Transferzeit kaum von der Abschwächeinstellung ab, womit die Absolutdistanz kaum verfälscht wird. Natürlich kann aber auch hier eine Range-Walk-Korrektur ermittelt und jeweils bei der finalen Distanzkorrektur berücksichtigt werden.

Anschliessend wird die Sendestrahlung im Sendekanal über eine Verzögerungsstrecke 24, z.B. eine 10 m Verzögerungsfaser, über einen winkelfazettierten Faserkollimator 25 in einen Freistrahl überführt. Die Verzögerungsstrecke hat beispielsweise den Effekt, den elektronischen Crosstalk auf den Empfänger abklingen zu lassen, bevor das Messsignal diesen erreicht.

Der Einsatz von singlemode Fasern hat beispielsweise den Vorteil geringer Dispersion, wodurch die Sendesignale nicht verbreitert werden. Eine mehrere Meter lange Verzögerungsfaser erzeugt daher keine Pulsverzerrung und damit keine Distanzfehler.

Auf der Empfängerseite hingegen müssen wegen des durch rauhe Zieloberflächen erzeugten räumlichen Phasengemisches im Strahlenbündel typischerweise Multimodefasern verwendet werden. Die Verwendung von Multimodefasern als Verzögerungsfasern hat jedoch beispielsweise den Nachteil grosser Dispersion, was insbesondere bei Fixfokusoptik distanzabhängige Fehler erzeugt.

Ferner wirkt beispielsweise ein elektrisch einstellbares Abschwächfilter 17, z.B. ein Graukeilrad, optional als senderseitiges Antiboomerangfilter 17.

Als Alternative zur Figur 3 wird hier als weiteres Beispiel anstelle einer mechanisch einschwenkbaren Divergenzlinse ein schaltbares diffraktives optisches Element (DOE) oder ein elektrooptisch ansteuerbarer Spatial Light Modulator (SLM) zur einstellbaren Strahlaufweitung 16 eingesetzt.

Der Empfangskanal ist beispielsweise mit einer Multimodefaser bestückt, die das Empfangslicht zum Empfänger (nicht eingezeichnet) leitet. Weiter wird im gezeigten Beispiel auf einen empfängerseitigen Antiboomerangfilter verzichtet, da beispielsweise eine schräg fazettierte Faser als weitere Antiboomerangmassnahme verwendet werden kann.

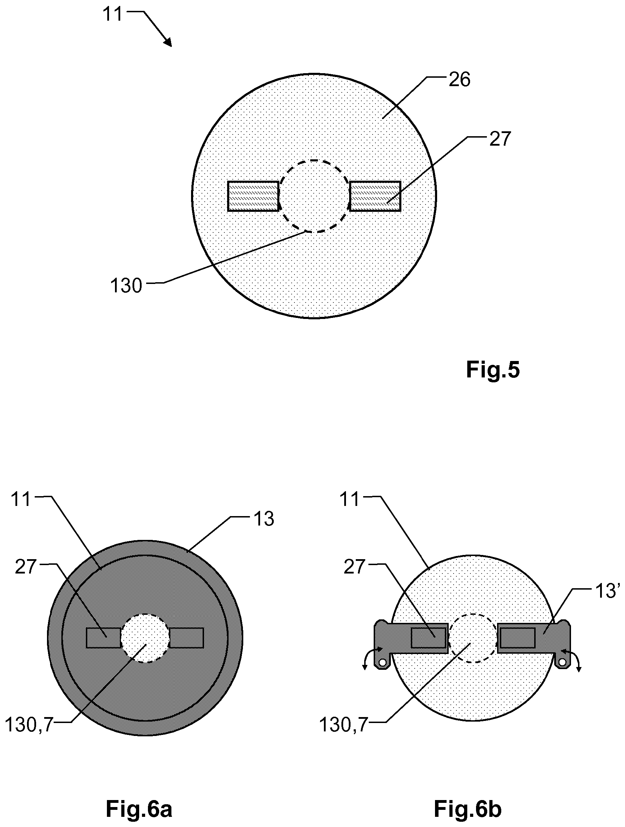

**Figur 5** zeigt eine Ausführungsform einer Korrekturoptik zur Verwendung in einem optischen Distanzmesser gemäss der vorliegenden Erfindung. Diese besteht beispielsweise aus einer Planplatte 26, welche beispielsweise eingelegte optisch wirksame Bereiche 27 mit korrigierender Wirkung aufweist, z.B. optische Keile, zylindrische Linsen, Optiken mit Freiformflächen, gleitende Brechkraftflächen, Fresnelstrukturen, oder diffraktive Strukturen. Dadurch werden die die optisch wirksamen Bereiche 27 passierende Teile der Empfangsstrahlung auf den Empfänger 10 (Fig. 1a) abgelenkt um im Empfangskanal eine Korrekturzone zu bilden zur Kompensation eines Fokusfehlers bei der Fokussierung von aus einer Distanz kürzer als eine definierte Nahbereichsgrenzdistanz zurückkommenden Teilen der Empfangsstrahlung. Alternativ betrachtet erweitern die optisch wirksamen Bereiche 27 das empfängerseitige Gesichtsfeld (RX-FOV), sodass der Messlichtfleck am Zielobjekt auch bei kurzen Distanzen eingesehen werden kann.

Die Wirkung der einschwenkbaren Blende 13 auf das Strahlbündel am Ort der Korrekturoptik 11 ist mittels der schraffierten Linie 130 dargestellt, welche die erste Apertur im ersten Messmodus darstellt. Die zweite Apertur (bei ausgeschwenkter Blende 13) umfasst im Wesentlichen die gesamte freie Öffnung der Korrekturoptik 11.

**Figuren 6a und 6b** zeigen eine schematische Darstellung der gemeinsamen Wirkung der Korrekturoptik 11 zusammen mit der erfinderischen, schaltbaren Aperturblende im Empfangskanal in der sogenannten Footprint-Darstellung. Bei dieser Darstellung werden die Strahlenbündel in eine gemeinsame Ebene senkrecht zur optischen Achse projiziert. Dabei wird die Wirkung von mehreren optischen Bauteilen im System und ihrer gegenseitigen Anordnung längs der optischen Achse sichtbar.

Die Figuren beziehen sich auf zwei Ausführungsformen der schaltbaren Aperturblende 13,13' und zeigen jeweils die beiden wesentlichen Querschnitte der Empfangsbündel bei der Einstellung für retroreflektive Ziele. Die durch das fix angeordnete Abschwächelement 4 (Fig. 1a) definierte zentrale Zone 7 wird dabei nicht durch die optisch wirksamen Bereiche 27 der Korrekturoptik 11 erfasst, liegt hier also im Wesentlichen innerhalb der durch die schaltbare Aperturblende definierten ersten Apertur 130.

Wie in Figur 6a dargestellt, erzeugt die schaltbare Aperturblende 13 die erste Apertur 130 und bewirkt, dass in eben dieser für Reflektormessungen relevanten zentralen Zone 7 liegende Strahlenbündel der Empfangsstrahlung keine weiteren optischen Bauteile (ausserhalb der ersten Apertur 130) passieren. Ferner wirkt das fix angeordnete Abschwächelement 4 zugleich auch als Nahbereichsoptik für Reflektormessungen, so dass auch bei kurzen Distanzen im Nahbereich für genaue Messungen ausreichend Signal vorhanden ist.

Bei reflektorlosen Zielen soll die Apertur typischerweise möglichst gross sein und die schaltbare Aperturblende 13 wird ausgeschwenkt. Neben dem Bündel der zentrale Zone 7 erreicht jetzt auch das Lichtbündel über die gesamte Korrekturoptik 11 den Empfänger. Zudem wird auch das schaltbare Abschwächelement 14 ausgeschwenkt, so dass das Distanzmesssignal weiter ansteigt.

Das optische System ist derart ausgelegt, dass alle Strahlengänge die gleiche optische Länge aufweisen, egal ob sie über die zentrale Zone 7, die optisch wirksamen Bereiche 27 der Korrekturoptik 11 oder ausserhalb dieser Zonen passieren.

Um ferner auch bei Reflektormessungen das Empfangssignal noch weiter zu steigern, beispielsweise bei Messungen auf grosse Distanzen, wo Boomerang-Effekte durch das reduzierte Empfangssignal automatisch kleiner werden, kann optional das schaltbare Abschwächelement 14 aus dem Strahlengang des Empfangskanals ausgeschwenkt werden, womit das Signal-Rauschverhältnis nochmals vergrössert wird.

Figur 6b zeigt Querschnitte der Empfangsbündel gemäss einer weiteren Ausführungsform der schaltbaren Aperturblende 13'. In diesem Beispiel besteht die schaltbare Aperturblende 13' aus zwei Segmenten die jeweils nur die optisch wirksamen Bereiche 27 der Korrekturoptik 11 ein- oder ausblenden. Das retroreflektive Strahlenbündel wird in diesem Fall im Empfänger weniger abgeschwächt als in der in Figur 6a dargestellten Ausführungsform, hat aber beispielsweise den Nachteil von allfälligem Streulicht im Nahbereich bei ganz kurzen Messdistanzen.

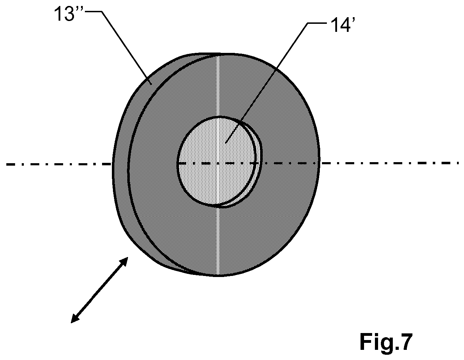

**Figur 7** zeigt eine Ausführungsform der schaltbaren Aperturblende 13" kombiniert mit einem in der schaltbaren Aperturblende 13" integrierten Abschwächelement 14', welches somit gleichzeitig das erfinderische schaltbare Abschwächelement bildet. Die Zusammenfassung der beiden erfinderischen Bauteile in einer einzigen Baugruppe hat beispielsweise den Vorteil dass eine einzige Aktuatoreinheit ausreicht, womit weniger Platz benötigt wird.

Im ersten Messmodus für retroreflektierende Ziele ist diese erfinderische Einheit in den Empfangsstrahl eingeschwenkt, so dass die zentrale Zone 7 (Fig. 1a) möglichst homogen und axialnah vom Strahlteiler 3 bis auf den Empfänger 10 geleitet wird.

Im zweiten Messmodus für natürliche, diffus streuende Oberflächen ist das kombinierte Bauteil aus dem Empfangsstrahlengang ausgeschwenkt, so dass sowohl bei Messungen auf kurze als auch auf lange Objektdistanzen möglichst viel Strahlung eingefangen und auf die Empfangseinheit gelenkt wird.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Optischer Distanzmesser zur Verwendung in einem Lasertracker, einem Laserscanner, einer Totalstation, oder einem Theodoliten, mit
• einem Transmitter (1,1'), der konfiguriert ist zum Erzeugen eines eine Zielachse definierenden gerichteten, insbesondere im Wesentlichen kollimierten, Sendestrahls (2),
• einem Empfänger (10), der konfiguriert ist zum Erfassen von zumindest einem Teil des vom Ziel zurückkommenden Sendestrahls, nachfolgend Empfangsstrahlung (5) genannt, und
• einem im Wesentlichen eine einzelne Erfassungsrichtung zum Erfassen der Empfangsstrahlung definierenden Empfangskanal,
wobei der Distanzmesser konfiguriert ist zum Durchführen einer Distanzmessung mittels einer Pulslaufzeitmessung des Sendestrahls (2) in
• einem ersten Messmodus, in dem der Distanzmesser eingestellt ist zur Distanzmessung auf ein retroreflektierendes Ziel (6), und
• einem zweiten Messmodus, in dem der Distanzmesser eingestellt ist zur Distanzmessung auf ein diffus streuendes Ziel (8),
**dadurch gekennzeichnet, dass**
der Empfangskanal derart konfiguriert ist, dass für das Erfassen der Empfangsstrahlung
• im ersten Messmodus eine erste Apertur (130) des Empfangskanals eingestellt ist, nämlich eine erste freie Öffnung des Empfangskanals durch welche der für die Distanzmessung im ersten Messmodus verwendete Teil der Empfangsstrahlung tritt,
• im zweiten Messmodus eine zweite Apertur des Empfangskanals eingestellt ist, nämlich eine zweite freie Öffnung des Empfangskanals durch welche der für die Distanzmessung im zweiten Messmodus verwendete Teil der Empfangsstrahlung tritt,
• wobei die erste Apertur kleiner ist als die zweite Apertur.

2. Optischer Distanzmesser nach Anspruch 1,
**dadurch gekennzeichnet, dass**
der Empfangskanal ein abhängig vom Durchführen des ersten und zweiten Messmodus schaltbares, nämlich im ersten und zweiten Messmodus unterschiedlich präsentes, Abschwächelement (14,14') aufweist,
insbesondere wobei
• das schaltbare Abschwächelement (14,14') als ein in den Empfangskanal ein- und ausschwenkbarer Filter mit einer Transmission kleiner als 50 Prozent ausgebildet ist, oder
• das schaltbare Abschwächelement (14,14') als ein Verlaufsfilterrad ausgebildet ist.

3. Optischer Distanzmesser nach einem der vorhergehenden Ansprüche,
**dadurch gekennzeichnet, dass**
der Empfangskanal eine die erste Apertur (130) definierende schaltbare Aperturblende (13,13',13") aufweist, wobei die schaltbare
Aperturblende (13,13',13") derart konfiguriert ist, dass
• die schaltbare Aperturblende (13,13',13") im ersten Messmodus in den Strahlengang des Empfangskanals eingeschwenkt wird, oder
• die Blendenöffnung der schaltbaren Aperturblende (13,13') derart einstellbar ist, dass mittels einer ersten Einstellung die erste Apertur (130) und mittels einer zweiten Einstellung die zweite Apertur eingestellt wird, insbesondere wobei die schaltbare Aperturblende (13,13') eine Irisblende ist.

4. Optischer Distanzmesser nach Anspruch 2 und 3,
**dadurch gekennzeichnet, dass**
das schaltbare Abschwächelement (14,14') und die schaltbare Aperturblende (13,13',13") auf einem gemeinsamen Verstellelement des Empfangskanals angeordnet sind und somit im ersten Messmodus gemeinsam in den Strahlengang des Empfangskanals einbeziehungsweise im zweiten Messmodus gemeinsam aus dem Strahlengang des Empfangskanals ausgeschwenkt werden.

5. Optischer Distanzmesser nach einem der vorhergehenden Ansprüche,
**dadurch gekennzeichnet, dass**
• der Empfangskanal ein fix angeordnetes, nämlich im ersten und zweiten Messmodus identisch präsentes, Abschwächelement (4) zur Abschwächung der durch das Abschwächelement tretenden Empfangsstrahlung aufweist, und
• das fix angeordnete Abschwächelement (4) in seiner lateralen Geometrie derart konfiguriert und in seiner lateralen Position im Empfangskanal derart angeordnet ist, dass
∘ das fix angeordnete Abschwächelement (4) im ersten Messmodus mindestens die durch die erste Apertur (130) tretenden Strahlenbündel der Empfangsstrahlung abschwächt, und
∘ im zweiten Messmodus durch die zweite Apertur tretende Empfangsstrahlung vom fix angeordneten Abschwächelement (4) nicht abgeschwächte Strahlenbündel aufweist.

6. Optischer Distanzmesser nach Anspruch 5,
**dadurch gekennzeichnet, dass**
• der Distanzmesser einen auf der optischen Achse des Empfangskanals angeordneten Strahlteiler (3) zum Einkoppeln des Sendestrahls auf eine zur optischen Achse des Empfangskanals koaxiale, der Zielachse entsprechenden, Achse aufweist,
• der Strahlteiler (3) derart konfiguriert und angeordnet ist, dass der Strahlteiler (3) in einer zentralen Zone (7) um die optische Achse des Empfangskanals eine partiell-transparente Schicht (4) aufweist, insbesondere wobei mittels der partiell-transparenten Schicht (4) in der zentralen Zone (7) ein Strahlteilungsverhältnis des Strahlteilers von weniger als 50 Prozent für den Empfangskanal erzeugt wird, und
• die partiell-transparente Schicht (4) zumindest einen Teil des fix angeordneten Abschwächelements (4) bildet, insbesondere wobei die partiell-transparente Schicht (4) das fix angeordnete Abschwächelement (4) bildet.

7. Optischer Distanzmesser nach einem der vorhergehenden Ansprüche,
**dadurch gekennzeichnet, dass**
der Empfangskanal eine eine Korrekturzone des Empfangskanals definierende Korrekturoptik (11) aufweist, zur Kompensation eines Fokusfehlers bei der Fokussierung von aus einer Distanz kürzer als eine definierte Nahbereichsgrenzdistanz zurückkommenden Teilen der Empfangsstrahlung auf dem Empfänger (10), nämlich wobei in der Korrekturzone liegende Teile der Empfangsstrahlung durch die Korrekturoptik (11) auf den Empfänger (10) abgelenkt werden,
insbesondere wobei die Korrekturoptik (11) derart angeordnet ist, dass
• zumindest ein Teil der durch die zweite Apertur tretenden Empfangsstrahlung innerhalb der Korrekturzone liegt, und
• durch die erste Apertur tretende Empfangsstrahlung im Wesentlichen ausserhalb der Korrekturzone liegt.

8. Optischer Distanzmesser nach den Ansprüchen 3, 5 und 7, **dadurch gekennzeichnet, dass**
das fix angeordnete Abschwächelement (4), die Korrekturoptik (11), und die schaltbare Aperturblende (13,13',13"), derart gegeneinander angeordnet und in ihrer lateralen Geometrie jeweils derart konfiguriert sind, dass
• im ersten Messmodus im Wesentlichen die gesamte auf den Empfänger (10) treffende Empfangsstrahlung durch das fix angeordnete Abschwächelement (4) abgeschwächt wird und ausserhalb der Korrekturzone liegt,
und
• im zweiten Messmodus die Aperturblende (13,13',13") aus dem Strahlengang des Empfangskanals ausgeschwenkt ist und durch die zweite Apertur tretende Empfangsstrahlung vom fix angeordneten Abschwächelement (4) nicht abgeschwächte Strahlenbündel aufweist, welche gleichzeitig innerhalb der Korrekturzone liegen, insbesondere wobei die Korrekturzone keinen Überlapp mit einer durch das fix angeordnete Abschwächelement (4) definierten Abschwächzone (7) aufweist.

9. Optischer Distanzmesser nach einem der vorhergehenden Ansprüche,
**dadurch gekennzeichnet, dass**
ein Sendekanal des optischen Distanzmessers ein schaltbares Abschwächelement (21) aufweist, insbesondere basierend auf mindestens einem von einem einstellbaren Graukeil-Filter, einem Flüssigkristallabschwächer, und einem faseroptischen Mach-Zehnder-Interferometer.

10. Optischer Distanzmesser nach einem der vorhergehenden Ansprüche,
**dadurch gekennzeichnet, dass**
das Verhältnis zwischen der Fläche der ersten Apertur (130) zur Fläche der zweiten Apertur kleiner als 1/10 ist, insbesondere kleiner 1/20.

## Claims

1. An optical distance meter for use in a laser tracker, a laser scanner, a total station or a theodolite, having
• a transmitter (1, 1') which is configured for generating a directed, in particular substantially collimated, transmission beam (2) defining a target axis,
• a receiver (10) which is configured for detecting at least a part of the transmission beam coming back from the target, referred to below as received radiation (5), and
• a receiving channel essentially defining an individual detection direction for detecting the received radiation,
wherein the distance meter is configured for carrying out a distance measurement by means of a pulse time of flight measurement of the transmission beam (2) in
• a first measuring mode, in which the distance meter is set up for distance measurement to a retroreflective target (6), and
• a second measuring mode, in which the distance meter is set up for distance measurement to a diffusely scattering target (8),
**characterized in that**
the receiving channel is configured in such a manner that, for the detection of the received radiation,
• in the first measuring mode, a first aperture (130) of the receiving channel is set, namely a first free opening of the receiving channel, through which the part of the received radiation used for the distance measurement in the first measuring mode passes,
• in the second measuring mode, a second aperture of the receiving channel is set, namely a second free opening of the receiving channel, through which the part of the received radiation used for the distance measurement in the second measuring mode passes,
• wherein the first aperture is smaller than the second aperture.

2. The optical distance meter according to Claim 1,
**characterized in that**
the receiving channel has an attenuating element (14, 14') which is switchable depending on the carrying out of the first and second measuring mode, namely which is present in a different way in the first and second measuring modes,
in particular wherein
• the switchable attenuating element (14, 14') is formed as a filter, which can be pivoted into and out of the receiving channel, with a transmission smaller than 50 per cent, or
• the switchable attenuating element (14, 14') is formed as a gradient filter wheel.

3. The optical distance meter according to any one of the preceding claims,
**characterized in that**
the receiving channel has a switchable aperture diaphragm (13, 13', 13") defining the first aperture (130), wherein the switchable aperture diaphragm (13, 13', 13") is configured in such a manner that
• the switchable aperture diaphragm (13, 13', 13") is pivoted into the ray path of the receiving channel in the first measuring mode, or
• the diaphragm opening of the switchable aperture diaphragm (13, 13') can be set up in such a manner that the first aperture (130) is set by means of a first setting and the second aperture is set by means of a second setting, in particular wherein the switchable aperture diaphragm (13, 13') is an iris diaphragm.

4. The optical distance meter according to Claim 2 and 3,
**characterized in that**
the switchable attenuating element (14, 14') and the switchable aperture diaphragm (13, 13', 13") are arranged on a common adjustment element of the receiving channel and thus are together pivoted into the ray path of the receiving channel in the first measuring mode or together pivoted out of the ray path of the receiving channel in the second measuring mode.

5. The optical distance meter according to any one of the preceding claims,
**characterized in that**
• the receiving channel has an attenuating element (4), which is fixedly arranged, namely which is present in an identical way in the first and second measuring modes, for attenuating the received radiation passing through the attenuating element, and
• the fixedly arranged attenuating element (4) is configured in such a manner in terms of its lateral geometry and is arranged in its lateral position in the receiving channel in such a manner that
∘ in the first measuring mode, the fixedly arranged attenuating element (4) attenuates at least the bundle of rays of the received radiation passing through the first aperture (130), and
∘ in the second measuring mode, received radiation passing through the second aperture has bundles of rays that are not attenuated by the fixedly arranged attenuating element (4) .

6. The optical distance meter according to Claim 5, **characterized in that**
• the distance meter has a beam splitter (3) arranged on the optical axis of the receiving channel for coupling the transmission beam onto an axis which is coaxial to the optical axis of the receiving channel and corresponds to the target axis,
• the beam splitter (3) is configured and arranged in such a manner that the beam splitter (3) has a partially transparent layer (4) in a central zone (7) around the optical axis of the receiving channel, in particular wherein a beam-splitting ratio of the beam splitter of less than 50 per cent is generated for the receiving channel by means of the partially transparent layer (4) in the central zone (7), and
• the partially transparent layer (4) forms at least a part of the fixedly arranged attenuating element (4), in particular wherein the partially transparent layer (4) forms the fixedly arranged attenuating element (4).

7. The optical distance meter according to any one of the preceding claims,
**characterized in that**
the receiving channel has a correction optical system (11), which defines a correction zone of the receiving channel, for compensating a focus error during focusing of parts of the received radiation coming back on the receiver (10) from a distance shorter than a defined close-range limit distance, namely wherein parts of the received radiation located in the correction zone are deflected by the correction optical system (11) onto the receiver (10),
in particular wherein the correction optical system (11) is arranged in such a manner that
• at least part of the received radiation passing through the second aperture is located inside the correction zone, and
• received radiation passing through the first aperture is essentially located outside the correction zone.

8. The optical distance meter according to Claims 3, 5 and 7,
**characterized in that**
the fixedly arranged attenuating element (4), the correction optical system (11) and the switchable aperture diaphragm (13, 13', 13") are arranged in such a manner with respect to one another and are in each case configured in such a manner in terms of their lateral geometry that
• in the first measuring mode, essentially the entirety of the received radiation hitting the receiver (10) is attenuated by the fixedly arranged attenuating element (4) and is located outside the correction zone, and
• in the second measuring mode, the aperture diaphragm (13, 13', 13") is pivoted out of the ray path of the receiving channel and received radiation passing through the second aperture has bundles of rays that are not attenuated by the fixedly arranged attenuating element (4), which are at the same time located inside the correction zone, in particular wherein the correction zone has no overlap with an attenuation zone (7) defined by the fixedly arranged attenuating element (4).

9. The optical distance meter according to any one of the preceding claims,
**characterized in that**
a transmission channel of the optical distance meter has a switchable attenuating element (21), in particular based on at least one of an adjustable neutral wedge filter, a liquid crystal attenuator, and a fibre-optic Mach-Zehnder interferometer.

10. The optical distance meter according to any one of the preceding claims,
**characterized in that**
the ratio between the area of the first aperture (130) and the area of the second aperture is less than 1/10, in particular less than 1/20.

## Revendications

1. Télémètre optique destiné à être utilisé dans un laser tracker, un scanner laser, une station totale ou un théodolite, comprenant :
• un émetteur (1, 1') configuré pour générer un faisceau d'émission (2) dirigé, en particulier essentiellement collimaté, définissant un axe cible,
• un récepteur (10) configuré pour détecter au moins une partie du faisceau d'émission renvoyé par la cible, ci-après dénommé rayonnement de réception (5), et
• un canal de réception définissant essentiellement une seule direction de détection pour détecter le rayonnement de réception,
le télémètre étant configuré pour effectuer une mesure de distance au moyen d'une mesure du temps de propagation des impulsions du faisceau d'émission (2) dans
• un premier mode de mesure, dans lequel le télémètre est réglé pour mesurer la distance par rapport à une cible rétroréfléchissante (6), et
• un deuxième mode de mesure, dans lequel le télémètre est réglé pour mesurer la distance par rapport à une cible à dispersion diffuse (8),
**caractérisé en ce que**
le canal de réception est configuré de telle sorte que, pour la détection du rayonnement de réception,
• dans le premier mode de mesure, une première ouverture (130) du canal de réception est réglée, à savoir une première ouverture libre du canal de réception à travers laquelle passe la partie du rayonnement reçu utilisée pour la mesure de distance dans le premier mode de mesure,
• dans le deuxième mode de mesure, une deuxième ouverture du canal de réception est réglée, à savoir une deuxième ouverture libre du canal de réception à travers laquelle passe la partie du rayonnement reçu utilisée pour la mesure de distance dans le deuxième mode de mesure,
• la première ouverture étant plus petite que la deuxième ouverture.

2. Télémètre optique selon la revendication 1,
**caractérisé en ce que**
le canal de réception présente un élément d'atténuation (14, 14') commutable en fonction de l'exécution des premier et deuxième modes de mesure, c'est-à-dire présent différemment dans les premier et deuxième modes de mesure,
en particulier dans lequel
• l'élément d'atténuation commutable (14, 14') est conçu comme un filtre pouvant être pivoté dans le canal de réception et hors de celui-ci, avec une transmission inférieure à 50 %, ou
• l'élément d'atténuation commutable (14, 14') est conçu comme une roue à filtres dégradés.

3. Télémètre optique selon l'une des revendications précédentes,
**caractérisé en ce que**
le canal de réception présente un diaphragme d'ouverture commutable (13, 13', 13") définissant la première ouverture (130), le diaphragme d'ouverture commutable (13, 13', 13") étant configuré de telle sorte que
• le diaphragme d'ouverture commutable (13, 13', 13") est pivoté dans le trajet optique du canal de réception dans le premier mode de mesure, ou
• l'ouverture de diaphragme du diaphragme d'ouverture commutable (13, 13') est réglable de telle sorte qu'un premier réglage permet de régler la première ouverture (130) et qu'un deuxième réglage permet de régler la deuxième ouverture, le diaphragme d'ouverture commutable (13, 13') étant en particulier un diaphragme à iris.

4. Télémètre optique selon les revendications 2 et 3,
**caractérisé en ce que**
l'élément d'atténuation commutable (14, 14') et le diaphragme d'ouverture commutable (13, 13', 13") sont disposés sur un élément de réglage commun du canal de réception et sont ainsi pivotés ensemble dans le trajet optique du canal de réception dans le premier mode de mesure, ou hors du trajet optique du canal de réception dans le deuxième mode de mesure.

5. Télémètre optique selon l'une des revendications précédentes, **caractérisé en ce que**
• le canal de réception présente un élément d'atténuation (4) disposé de manière fixe, c'est-à-dire présent de manière identique dans les premier et deuxième modes de mesure, destiné à atténuer le rayonnement de réception passant à travers l'élément d'atténuation, et
• l'élément d'atténuation disposé de manière fixe (4) est configuré dans sa géométrie latérale et disposé dans sa position latérale dans le canal de réception de telle sorte que
∘ l'élément d'atténuation disposé de manière fixe (4) atténue, dans le premier mode de mesure, au moins les faisceaux du rayonnement de réception passant par la première ouverture (130), et
∘ dans le deuxième mode de mesure, le rayonnement de réception passant par la deuxième ouverture présente des faisceaux non atténués par l'élément d'atténuation disposé de manière fixe (4).

6. Télémètre optique selon la revendication 5,
**caractérisé en ce que**
• le télémètre présente un diviseur de faisceau (3) disposé sur l'axe optique du canal de réception pour coupler le faisceau d'émission sur un axe coaxial à l'axe optique du canal de réception et correspondant à l'axe cible,
• le diviseur de faisceau (3) est configuré et disposé de telle sorte que le diviseur de faisceau (3) présente, dans une zone centrale (7) autour de l'axe optique du canal de réception, une couche partiellement transparente (4), en particulier de telle sorte que, au moyen de la couche partiellement transparente (4), un rapport de division de faisceau du diviseur de faisceau inférieur à 50 % est généré pour le canal de réception dans la zone centrale (7), et
• la couche partiellement transparente (4) forme au moins une partie de l'élément d'atténuation disposé de manière fixe (4), en particulier la couche partiellement transparente (4) formant l'élément d'atténuation disposé de manière fixe (4).

7. Télémètre optique selon l'une des revendications précédentes, **caractérisé en ce que**
le canal de réception présente une optique de correction (11) définissant une zone de correction du canal de réception, destinée à compenser un défaut de focalisation lors de la focalisation de parties du rayonnement de réception revenant d'une distance inférieure à une distance limite de proximité définie sur le récepteur (10), à savoir que les parties du rayonnement de réception situées dans la zone de correction sont déviées sur le récepteur (10) par l'optique de correction (11),
en particulier l'optique de correction (11) étant disposée de telle sorte que
• au moins une partie du rayonnement de réception passant par la deuxième ouverture se situe à l'intérieur de la zone de correction, et
• le rayonnement de réception passant par la première ouverture se situe essentiellement à l'extérieur de la zone de correction.

8. Télémètre optique selon les revendications 3, 5 et 7,
**caractérisé en ce que**
l'élément d'atténuation disposé de manière fixe (4), l'optique de correction (11) et le diaphragme d'ouverture commutable (13, 13', 13") sont disposés les uns par rapport aux autres et configurés dans leur géométrie latérale de telle sorte que
• dans le premier mode de mesure, la quasi-totalité du rayonnement de réception arrivant sur le récepteur (10) est atténuée par l'élément d'atténuation disposé de manière fixe (4) et se situe en dehors de la zone de correction, et
• dans le deuxième mode de mesure, le diaphragme d'ouverture (13, 13', 13") est pivoté hors du trajet optique du canal de réception et le rayonnement de réception passant par la deuxième ouverture présente des faisceaux non atténués par l'élément d'atténuation disposé de manière fixe (4), lesquels se situent en même temps à l'intérieur de la zone de correction, en particulier la zone de correction ne présentant aucun chevauchement avec une zone d'atténuation (7) définie par l'élément d'atténuation disposé de manière fixe (4).

9. Télémètre optique selon l'une des revendications précédentes,
**caractérisé en ce que**
un canal d'émission du télémètre optique présente un élément d'atténuation commutable (21), basé en particulier sur au moins l'un parmi un filtre à densité neutre en coin réglable, un atténuateur à cristaux liquides et un interféromètre de Mach-Zehnder à fibre optique.

10. Télémètre optique selon l'une des revendications précédentes,
**caractérisé en ce que**
le rapport entre la surface de la première ouverture (130) et la surface de la deuxième ouverture est inférieur à 1/10, en particulier inférieur à 1/20.
